# FASCICULE DE BREVET EUROPEEN

(11) **EP 1 407 253 B1**
(45) Date de publication et mention de la délivrance du brevet: **11.02.2009**
(21) Numéro de dépôt: 02727057.8
(22) Date de dépôt: 23.04.2002
(51) Int. Cl.: G01N 21/952, B21B 38/00

(54) **PROCEDE POUR L'INSPECTION DE LA SURFACE D'UN CYLINDRE DE LAMINOIR**
VERFAHREN ZUR PRÜFUNG DER OBERFLÄCHE EINER WALZWERKWALZE
METHOD FOR INSPECTING THE SURFACE OF A ROLL CYLINDER

(30) Priorité: 17.07.2001 BE 200100482
(43) Date de publication de la demande: 14.04.2004
(73) Titulaire: Centre de Recherches Metallurgiques - Centrum voor de Research in de Metallurgie, 1200 Bruxelles (BE)
(72) Inventeur: FRANSSEN, Roger, B-4850 MONTZEN-PLOMBIERES (BE); SCHYNS, Marc, B-4960 ROCLENGE-SUR-GEER (BE); UIJTDEBROEKS, Hugo, B-3500 HASSELT (BE)
(74) Mandataire: pronovem
(86) Numéro de dépôt international: PCT/BE2002/000060
(87) Numéro de publication internationale: WO 2003/008951

(56) Documents cités:
- EP-A- 0 697 591
- DE-A- 4 130 217
- JP-A- 09 304 287
- BAHNERS T ET AL: "OPTISCHE PROFILOMETER ZUR ON-LINE-ÜBERWACHUNG VON WALZEN IN TEXTIL- UND ANDEREN MASCHINEN" TECHNISCHES MESSEN TM, R.OLDENBOURG VERLAG. MUNCHEN, DE, vol. 64, no. 9, 1 septembre 1997 (1997-09-01), pages 316-324, XP000736149 ISSN: 0171-8096
- XP001043697

## Description

### Domaine technique

La présente invention concerne un procédé pour l'inspection de la surface d'un cylindre de laminoir, et plus généralement d'un corps cylindrique.

### Etat de la technique

Il existe dans l'industrie de nombreuses applications où l'état de la surface d'un outil de fabrication conditionne au moins en partie la qualité du produit fabriqué. Un cas particulier extrêmement important est celui de la fabrication de bandes en acier, dont la qualité superficielle dépend, dans une large mesure, de l'état de surface des cylindres de travail du laminoir.

Au cours du laminage, en effet, la surface des cylindres de travail se dégrade progressivement par oxydation, par incrustation de particules d'oxydes, par fissuration due aux chocs thermiques, ou encore par arrachement de pellicules métalliques sous l'effet des contraintes superficielles. Il importe dès lors d'inspecter régulièrement la surface des cylindres de laminoir, en particulier des cylindres de travail inférieurs des premières cages finisseuses, dont l'usure est particulièrement rapide.

Initialement, l'inspection de la surface des cylindres consistait en un simple examen visuel effectué par un opérateur à l'occasion du remplacement des cylindres de travail. Dans certains cas, des inspections intermédiaires étaient requises, par exemple en raison de la présence de défauts sur les bandes laminées. Il était alors nécessaire d'arrêter le laminoir et quelquefois même de démonter les cylindres. Ces arrêts intermédiaires, non programmés, demandent beaucoup de temps et entraînent une perte de productivité. Outre cet inconvénient, le caractère subjectif de telles inspections visuelles peut affecter la qualité de l'examen, qui ne répond dès lors plus aux exigences actuelles de fiabilité, de reproductibilité et de rapidité.

On connaît certes déjà dans la technique des procédés et des dispositifs pour l'inspection de la surface des cylindres de laminoir, en particulier au moyen de caméras, équipées de moyens assurant l'éclairage, disposées à proximité des cylindres à inspecter. D'une manière générale, les systèmes connus présentent cependant l'inconvénient d'inspecter la surface suivant une direction fixe.

Pour que l'inspection d'une surface puisse être effectuée de manière satisfaisante, elle doit idéalement se faire de façon spéculaire, c'est-à-dire que la direction d'inspection doit .être perpendiculaire à la surface au point d'observation: Dans le cas de surfaces telles que celles de cylindres de laminoir, l'inspection suivant une direction fixe perd rapidement son éventuel caractère spéculaire initial au fur et à mesure de la réduction du diamètre des cylindres résultant des opérations de rectification de la surface du cylindre, destinées à éliminer les défauts apparus à leur surface.

Le document JP 09 304287 A décrit un appareil d'éclairage configuré pour que son axe optique croise la surface d'un cylindre à inspecter à angle droit et présentant une pluralité de caméras sous forme de détecteurs linéaires disposés en zigzag par rapport au plan de la source et selon la longueur du cylindre. La surface cylindrique d'une partie irradiée par la lumière émise selon un angle prédéterminé θ compris à l'intérieur de la zone d'émission de lumière de l'appareil d'éclairage est photographiée par les caméras à détecteurs linéaires et les résultats de photographie sont fournis à un processeur d'image afin de déterminer s'il y a un défaut d'apparence du cylindre à inspecter.

Dans G. MOREAS et Y. HARDY, Caractérisation des tôles «galvannealed», La Revue de Métallurgie-CIT (2001), pp. 599-606, on décrit un capteur d'inspection à fort grossissement de surface de tôles galvanneal, installé sur ligne de production. Le capteur spécifique comprend un objectif de microscope et son optique associée, une caméra CCD couplée à un système de traitement d'image, une source de lumière laser, un système de positionnement et de focalisation motorisé, un capteur de distance et un PC avec une interface d'entrées/sorties. Afin de positionner précisément l'axe optique strictement perpendiculairement à la surface de la tôle à observer (plan XY), pour que l'image soit nette sur tout le champ de vision, deux tables de rotation motorisées ont été installées.

### Présentation de l'invention

La présente invention a pour objet de remédier à cet inconvénient en proposant un procédé pour améliorer l'inspection de la surface d'un cylindre de laminoir, qui tient compte du diamètre de ce cylindre et qui permet de conserver une inspection spéculaire dans toute la gamme de variation du diamètre du cylindre. A cet effet, l'invention propose un procédé permettant d'ajuster l'inclinaison relative de l'axe optique du système d'inspection par rapport à la normale à la surface du cylindre au point d'observation, et par conséquent de tenir compte d'une modification du diamètre lors d'un changement de cylindre. Un tel changement de cylindre se produit habituellement plusieurs fois par jour, et le diamètre du nouveau cylindre mis en palace est en général différent de celui du cylindre remplacé. Il existe actuellement un besoins de pouvoir adapter l'orientation du système d'inspection en fonction du diamètre du cylindre.

Conformément à la présente invention, un procédé pour l'inspection de la surface d'un cylindre de laminoir, dans lequel on observe au moins une zone de ladite surface au moyen d'un dispositif d'inspection présentant un axe optique orienté vers ladite zone de la surface en vue de déterminer l'état de la surface dudit cylindre, est caractérisé en ce que l'on capte au moins une image de ladite zone fournie par ledit dispositif d'inspection, en ce que l'on analyse au moins une desdites images captées, en ce que l'on compare l'analyse de ladite image captée, respectivement desdites images captées, avec l'analyse d'une image de référence, en ce que l'on détecte les écarts existant entre l'analyse de l'image captée, respectivement desdites images captées, et l'analyse de ladite image de référence, et en ce que l'on ajuste au moins l'orientation dudit axe optique de façon au moins à réduire, et de préférence à supprimer, lesdits écarts.

On fait varier progressivement l'orientation de l'axe optique du dispositif d'inspection, dirigé vers la zone de la surface à inspecter, pour chaque position dudit axe optique on observe ladite zone par un balayage parallèle à la direction de l'axe du cylindre, on forme une image de ladite zone constituée par des lignes parallèles à la direction de l'axe du cylindre, on détermine la valeur moyenne du niveau de gris de chacune desdites lignes de l'image, on trace un profil desdits niveaux moyens de gris, on compare chacun desdits profils ainsi tracés à un profil de référence correspondant à une inclinaison correcte de l'axe optique, et on modifie l'inclinaison de l'axe optique pour corriger les écarts éventuellement constatés entre lesdits profils ainsi tracés et ledit profil de référence.

Suivant une mise en oeuvre préférée, on détermine la position d'une grandeur caractéristique du profil correspondant à chaque image, et on règle l'inclinaison de l'axe optique dans la position pour laquelle la position de ladite grandeur caractéristique dudit profil est égale ou proche de la grandeur caractéristique correspondant à une image pour laquelle la réflexion est spéculaire au milieu de l'image.

Au sens de la présente demande, ledit profil est de préférence transversal, c'est-à-dire tracé suivant une direction perpendiculaire à la direction de balayage de l'image.

Avantageusement, la grandeur caractéristique dudit profil peut être par exemple la valeur du maximum ou le centre de gravité de ce profil.

Selon une caractéristique supplémentaire, on détermine le niveau moyen de gris d'une ligne de l'image en mesurant le niveau de gris en un nombre prédéterminé de points, de préférence en chacun des points de la ligne et en calculant la valeur moyenne des niveaux de gris mesurés en ces points de la ligne.

Avantageusement, le niveau de gris en un point est mesuré en faisant référence à une échelle prédéterminée, par exemple une échelle comportant 256 niveaux de gris entre le noir absolu et le blanc absolu, appelé aussi la saturation blanche.

Si l'on considère que le niveau de gris le plus élevé est celui qui correspond à la réflexion spéculaire du faisceau lumineux d'inspection, la position de la grandeur caractéristique dans le profil du niveau moyen de gris indiquera l'inclinaison de l'axe optique correspondant le mieux à cette réflexion spéculaire, et dès lors aussi à la position du point de réflexion spéculaire dans la zone observée.

L'inclinaison de l'axe optique peut être réglée par toute méthode appropriée.

Suivant une première possibilité, l'inclinaison de l'axe optique peut être réglée, de façon mécanique, par un pivotement du dispositif d'inspection, ou d'une partie de celui-ci, autour d'un axe parallèle à l'axe du cylindre à observer.

Une autre possibilité consiste à régler cette inclinaison par des moyens optiques. En particulier, le faisceau lumineux du dispositif d'inspection, respectivement de la caméra, peut être dévié par un système mobile, par exemple un jeu de miroirs ou de prismes, permettant de modifier l'inclinaison du faisceau lumineux sortant.

L'inclinaison de l'axe optique peut bien entendu être réglée manuellement, à partir des résultats de l'analyse d'image exposée plus haut. Le réglage de l'inclinaison de l'axe optique peut aussi être avantageusement effectué de façon automatique, sur la base de l'analyse des images de la zone observée.

On s'est référé jusqu'à présent à une inspection de surface effectuée en réflexion spéculaire, c'est-à-dire perpendiculairement à la surface au point d'observation. Il s'agit bien entendu d'une situation idéale, dans laquelle l'axe optique du dispositif d'inspection se confond avec la normale à la surface au point d'observation. En pratique, la réflexion peut encore être considérée comme spéculaire si les deux directions précitées présentent entre elles un angle très faible, typiquement inférieur à 0,25° pour des cylindres de diamètre de l'ordre de 750 mm. Si cet angle augmente, la réflexion devient diffuse, ce qui se traduit par une forte réduction de l'éclairement du détecteur du dispositif d'inspection. L'observation en réflexion diffuse peut néanmoins fournir des informations intéressantes, en renforçant par exemple la visibilité de certains détails, comme des défauts de surface.
L'obtention d'une image exploitable par le procédé précité implique que plusieurs conditions soient respectées, en plus de l'orientation correcte de l'axe d'observation. Il s'agit notamment de l'éclairage de la zone observée et de la netteté de l'image obtenue de cette zone.

Le dispositif d'inspection de la surface du corps cylindrique comporte des moyens de réglage de l'inclinaison de l'axe optique, et peut avantageusement comporter aussi des moyens de réglage de la mise au point du dispositif d'inspection ainsi que des moyens de réglage de l'éclairage de la zone observée et de la sensibilité du dispositif d'inspection.

Les moyens de réglage de l'inclinaison de l'axe optique peuvent être purement mécaniques, c'est-à-dire assurant un simple pivotement de cet axe optique autour d'un axe parallèle à l'axe du cylindre.

En raison des conditions ambiantes régnant dans une cage de laminoir, le dispositif d'inspection, généralement une caméra, est logé dans un boîtier étanche, éventuellement refroidi à l'eau. Ce boîtier est habituellement monté sur un rail transversal, c'est-à-dire parallèle à l'axe du cylindre.

Pour assurer le pivotement de l'axe optique du dispositif d'inspection, ce dispositif peut comporter isolément ou en combinaison:
- un boîtier fixe et des moyens pour faire pivoter la caméra à l'intérieur du boîtier fixe;
- un boîtier pivotant, une caméra fixe dans ledit boîtier, et des moyens pour faire pivoter ledit boîtier - avec la caméra - par rapport au support du boîtier,
- un boîtier fixé sur un support pivotant, une caméra fixe dans ledit boîtier, et des moyens pour faire pivoter ledit support.

En particulier, la caméra peut être pivotante dans un boîtier lui-même pivotant, le pivotement du boîtier assurant par exemple un réglage initial relativement grossier et le pivotement de la caméra assurant le réglage final précis.

Les différents mouvements pivotants évoqués peuvent être réalisés par des dispositifs appropriés, notamment des vérins pneumatiques montés entre un point fixe et l'organe (boîtier, caméra, support) à faire pivoter.

Avantageusement, il est encore prévu des moyens de mesure et d'affichage de l'inclinaison de l'axe optique du dispositif d'inspection, notamment de la caméra, respectivement du boîtier et/ou de son support.

Dans une autre variante, les moyens de réglage de l'inclinaison de l'axe optique sont des moyens optiques, ou encore une combinaison de moyens optiques et mécaniques, les moyens mécaniques étant réservés, par exemple, au réglage grossier et les moyens optiques au réglage fin.

Dans cette variante, l'ensemble du dispositif d'inspection, c'est-à-dire le support du boîtier, le boîtier lui-même et la caméra sont fixes.

Le dispositif d'inspection comporte en l'occurrence un système optique réglable, constitué par un jeu de miroirs et/ou de prismes mobiles, disposé sur le trajet du faisceau lumineux. Le déplacement de ce système optique, par translation ou par rotation, permet de modifier l'inclinaison du faisceau lumineux sortant de la caméra. La position de ce système optique, et par conséquent l'orientation du faisceau lumineux sortant, est repérée par des moyens appropriés connus dans la technique.

Suivant une caractéristique supplémentaire, le dispositif d'inspection comporte des moyens de réglage de la mise au point de la caméra, de manière à obtenir des images nettes, quel que soit le diamètre du cylindre. Ce réglage peut être effectué, par exemple, directement après le changement de cylindre.

La mise au point peut être réglée en déplaçant le dispositif d'inspection, respectivement la caméra, en translation le long de son axe optique. Le dispositif peut être muni à cet effet d'un mécanisme, par exemple un vérin pneumatique ou une barre filetée, qui assure le déplacement parallèle du dispositif d'inspection, respectivement de la caméra, le cas échéant à l'intérieur de son boîtier.

Dans une autre forme de réalisation, la caméra peut être munie d'un objectif équipé d'un dispositif de mise au point motorisé.

Le réglage de la mise au point peut être commandé manuellement, ou avantageusement de façon automatique à partir de l'analyse des images de la zone observée.

De manière avantageuse, le dispositif d'inspection, respectivement la caméra, peut encore être équipé(e) d'un dispositif de réglage de la puissance d'éclairage associé à un dispositif de réglage de la sensibilité de la caméra.

Dans le cas fréquent d'un éclairage stroboscopique, la gamme dans laquelle l'énergie de chaque impulsion lumineuse peut être modifiée est en effet généralement insuffisante pour que le système puisse être utilisé aussi bien en réflexion spéculaire qu'en réflexion diffuse. D'autre part, toujours en éclairage stroboscopique, les circuits de contrôle automatique de gain de la caméra ne fonctionnent pas correctement en cas de taux de répétition faible des cadences d'éclairage.

Le dispositif d'inspection est dès lors de préférence équipé d'une caméra comportant un système de contrôle à distance du gain, par ailleurs connu dans la technique. Ce contrôle peut d'ailleurs être effectué manuellement par un opérateur, ou de façon automatique à partir de l'analyse des niveaux de gris des images de la zone observée.

### Brève description des dessins

L'invention sera maintenant décrite plus en détail à raide d'exemples de réalisation, illustrés schématiquement par les dessins annexés, dans lesquels la
- Fig. 1: représente une forme de réalisation d'un dispositif mécanique de réglage de l'inclinaison de l'axe optique d'un dispositif d'inspection; la
- Fig. 2: représente une forme de réalisation d'un dispositif optique de réglage de l'inclinaison et/ou de position de l'axe optique d'un dispositif d'inspection; et la
- Fig. 3: montre trois exemples de profils transversaux de niveaux de gris moyens, au sens de la présente invention.

Il va de soi que ces représentations ne comportent que les éléments nécessaires à la compréhension de l'invention. Des éléments identiques ou analogues sont désignés par les mêmes repères numériques dans les différentes figures.

### Modes de réalisation de invention

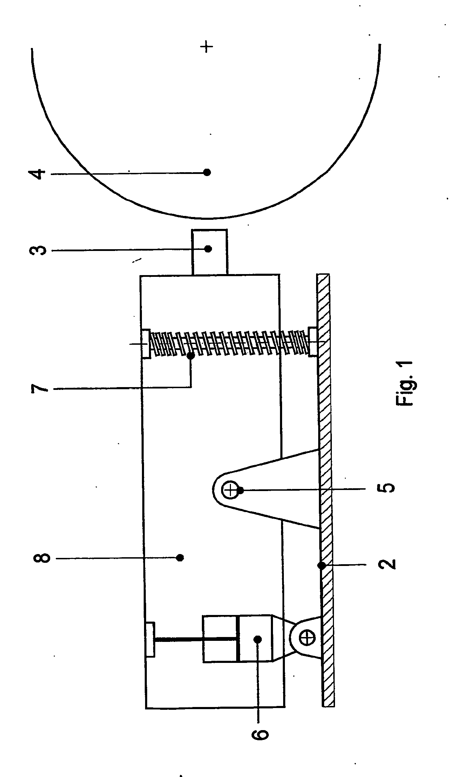

On a représenté schématiquement, dans la figure 1, un dispositif mécanique de réglage de l'inclinaison de l'axe optique d'un dispositif d'inspection.

Le dispositif d'inspection, représenté ici globalement par le boîtier de protection 8, est monté sur un support fixe 2 faisant partie d'une cage de laminoir. Son embout de visée 3 est dirigé vers un cylindre de laminoir 4; il s'agit par exemple d'un cylindre inférieur d'une cage finisseuse de laminage à chaud.

Dans cette forme de réalisation, le dispositif d'inspection est monté sur le support fixe 2 par l'intermédiaire de paliers 5, dont un seul est visible dans la figure, de façon à pouvoir pivoter autour d'un axe parallèle à l'axe du cylindre 4. Le mouvement de pivotement du dispositif d'inspection est appliqué au moyen d'un vérin pneumatique 6, disposé par exemple entre le support fixe 2 et le dispositif d'inspection 1. Un ressort 7, disposé au-delà de l'articulation 5 par rapport au vérin 6, permet d'amortir le mouvement pivotant du dispositif d'inspection.

Un déplacement du piston du vérin 6 provoque un pivotement du dispositif d'inspection autour de l'axe des paliers 5, et par conséquent une modification de l'inclinaison de l'axe optique du dispositif d'inspection. Cette modification est adaptée de façon à assurer une réflexion spéculaire à la surface d'un nouveau cylindre, non représenté, remplaçant le cylindre actuel 4.

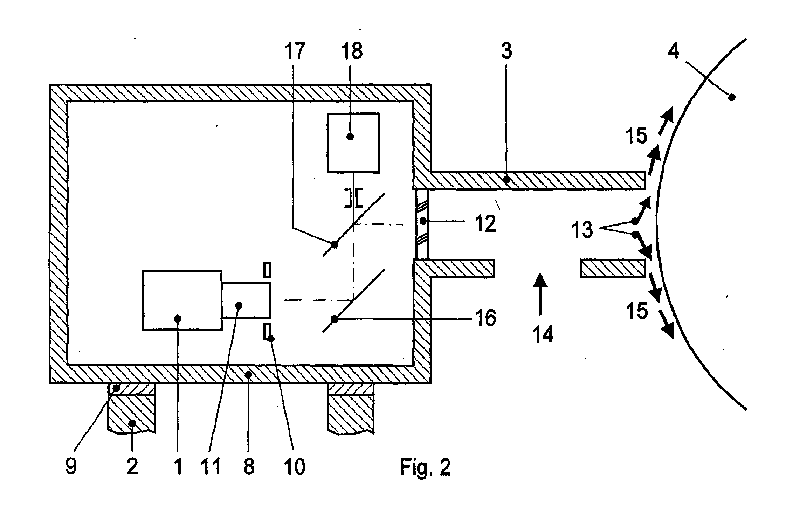

La figure 2 représente un dispositif optique pour le réglage de la position et/ou de l'inclinaison de l'axe optique d'un dispositif d'inspection.

La caméra 1 est ici montée dans un boîtier étanche 8, lequel est à son tour monté sur un support fixe 2, éventuellement via des amortisseurs de vibrations 9. De façon connue l'objectif 11 de la caméra 1 est muni d'une source de lumière 10 et son axe optique est dirigé vers le cylindre 4.

Du côté du cylindre 4, le boîtier 8 présente un embout de visée 3, communiquant avec l'intérieur du boîtier 8 par une fenêtre 12 ménagée dans la paroi du boîtier. Cet embout 3 se prolonge jusqu'à proximité du cylindre 4, en formant une fente d'extrémité 13. L'embout 3 est parcouru par de l'eau en écoulement laminaire 14, 15, qui assure d'une part la propreté de la fenêtre 12 et d'autre part une protection contre la pénétration de particules par la fente 13. On garantit ainsi une vision nette et non perturbée de la surface du cylindre.

A l'intérieur du boîtier 8, un premier miroir 16, fixe, disposé en face de l'objectif 11, dévie l'axe optique vers un second miroir 17, pivotant, placé à hauteur de la fenêtre 12. Ce second miroir 17 dévie l'axe optique à travers la fenêtre 12, en direction du cylindre 4. La rotation de ce second miroir 17, commandée par un galvanomètre 18, permet de modifier l'orientation finale de l'axe optique pour assurer la réflexion spéculaire sur le cylindre 4, lorsque le diamètre de celui-ci change.

L'importance du réglage à apporter à l'inclinaison de l'axe optique dépend de l'écart entre la réflexion observée et la réflexion optimale, idéalement spéculaire, au point d'observation. Dans la pratique, le point d'observation se situe au milieu d'une petite zone observée sur la surface du cylindre. L'image de cette zone observée est captée et avantageusement enregistrée par la caméra 1.

Pour déterminer la position correcte de l'axe optique, on peut procéder de la façon suivante.

Après avoir réglé la mise au point de l'objectif et éventuellement l'éclairage de la surface à inspecter, on modifie progressivement l'inclinaison de l'axe optique et, pour chaque position dudit axe optique, on enregistre l'image de la zone observée. Pour chaque image, on trace le profil transversal des niveaux de gris moyens de chaque ligne de balayage constituant l'image. On règle finalement l'inclinaison de l'axe optique à la position angulaire pour laquelle la grandeur caractéristique choisie de ce profil, par exemple le maximum ou le centre de gravité, se situe au milieu de l'image de la zone observée.

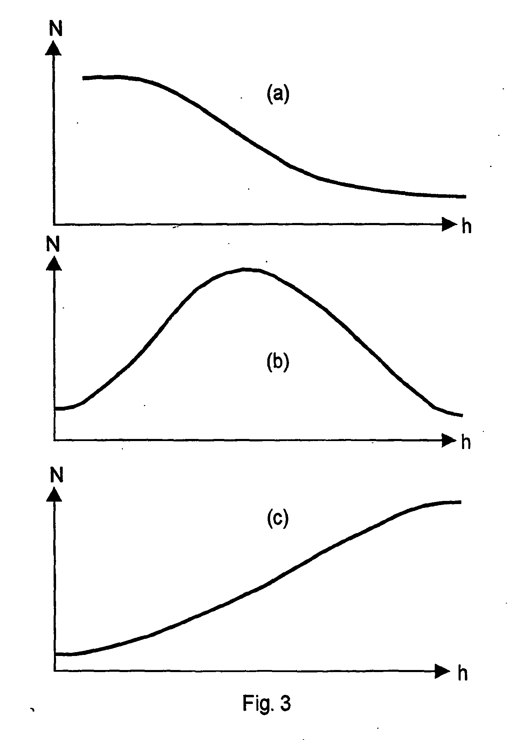

La figure 3 montre des exemples de profils de ce niveau de gris moyen.

Les courbes (a), (b) et (c) indiquent l'évolution des niveaux de gris moyens N des lignes correspondant à des images, en fonction de la position h de la ligne dans l'image, considérée dans une direction perpendiculaire auxdites lignes et comptée à partir du bas de l'image.

Les courbes (a) et (c) indiquent respectivement que la meilleure réflexion se fait dans la partie basse, respectivement dans la partie haute, de la zone observée. Les inclinaisons correspondantes ne permettent pas une observation satisfaisante de la surface du cylindre 4. En revanche, la courbe (b) traduit une réflexion spéculaire dans la région centrale de la zone observée, c'est-à-dire une bonne répartition du champ d'observation dans cette zone.

L'axe optique sera dès lors positionné de façon optimale à cette inclinaison. On pourra par exemple utiliser à cet effet un dispositif mécanique ou un dispositif optique du type décrit plus haut

Dans la description qui précède, on a considéré implicitement que l'axe optique du dispositif d'inspection était situé dans un plan perpendiculaire à l'axe du corps cylindrique, et plus spécialement à l'axe du cylindre de laminoir. Il ne s'agit cependant pas d'une condition impérative ou limitative, et l'invention s'étend également au réglage dudit axe optique par rapport à un autre axe, par exemple pour corriger un défaut de perpendicularité dudit plan par rapport à l'axe du corps cylindrique.

## Revendications

1. Procédé pour l'inspection de la surface d'un corps cylindrique (4), dans lequel :
- au moins une zone de ladite surface est observée au moyen d'un dispositif d'inspection (1) présentant un axe optique orienté vers ladite zone en vue de déterminer l'état de surface dudit cylindre (4) ;
- une image de ladite zone fournie par ledit dispositif d'inspection (1) est captée et analysée, l'analyse de ladite image captée étant comparée avec l'analyse d'une image de référence, les écarts existant entre l'analyse de l'image captée et l'analyse de ladite image de référence étant détectés ;
- au moins l'orientation dudit axe optique est ajustée de façon à réduire ou supprimer lesdits écarts, et dans lequel :
- l'orientation de l'axe optique du dispositif d'inspection (1), dirigé vers la zone de la surface à inspecter, est progressivement variée ;
- ladite zone est observée pour chaque position dudit axe optique par un balayage parallèle à l'axe du cylindre ;
**caractérisé en ce que** :
- une image de ladite zone, comprenant des lignes parallèles à la direction de l'axe du cylindre (4), est formée ;
- la valeur moyenne de niveaux de gris de chacune desdites lignes de l'image est déterminée ;
- un profil desdits niveaux de gris moyens (a,b,c) est tracé en fonction de la position (h) des lignes dans l'image ;
- chacun desdits profils (a,b,c) ainsi tracés est comparé à un profil de référence correspondant à une inclinaison correcte de l'axe optique ; et
- l'inclinaison de l'axe optique est modifiée pour corriger les écarts éventuellement constatés entre lesdits profils ainsi tracés (a,b,c) et ledit profil de référence.

2. Procédé selon la revendication 1, **caractérisé en ce que**, dans l'étape de comparaison des profils tracés (a,b,c) avec le profil de référence correspondant à une inclinaison correcte de l'axe optique, la position d'une grandeur caractéristique du profil correspondant à chaque image est déterminée et l'inclinaison de l'axe optique est réglée dans la position pour laquelle la position de ladite grandeur caractéristique dudit profil est égale ou proche à la position de la grandeur caractéristique correspondant à une image pour laquelle la réflexion est spéculaire au milieu de l'image.

3. Procédé selon la revendication 2, **caractérisé en ce que** la grandeur caractéristique dudit profil est choisie parmi le groupe comprenant le maximum et le centre de gravité dudit profil.

4. Procédé selon la revendication 1, **caractérisé en ce que** le niveau de gris moyen d'une ligne de l'image est déterminé en mesurant le niveau de gris en un nombre prédéterminé de points de la ligne et en calculant la valeur moyenne des niveaux de gris mesurés en ces points de la ligne.

5. Procédé selon la revendication 1, **caractérisé en ce que** le corps cylindrique (4) est un cylindre de laminoir.

6. Procédé selon la revendication 1, **caractérisé en ce que** l'inclinaison de l'axe optique est mesurée et affichée.

7. Procédé selon la revendication 1, **caractérisé en ce qu'**une mise au point du dispositif d'inspection (1) est réglée.

8. Procédé selon la revendication 1, **caractérisé en ce que** l'éclairage de la zone observée et la sensibilité du dispositif d'inspection (1) sont réglés.

## Claims

1. Method for inspecting the surface of a cylindrical body (4) in which:
- at least one zone of said surface is observed by means of an inspection device (1) with an optical axis that is orientated towards said zone with a view to determining the state of the surface of said cylinder (4);
- an image of said zone provided by said inspection device (1) is recorded and analysed, the analysis of said recorded image being compared with the analysis of a reference image, the variations between the analysis of the recorded image and the analysis of said reference image being detected;
- at least the orientation of said optical axis is adjusted so as to reduce or suppress said variations;
and in which:
- the orientation of the optical axis of the inspection device (1), directed towards the zone of the surface to be inspected, is progressively varied;
- said zone is observed for each position of said optical axis by scanning parallel to the axis of the cylinder;
**characterised in that**:
- an image of said zone, comprising lines that are parallel to the direction of the axis of the cylinder (4), is forme;
- the average value of the grey levels of each of said lines of the image is determined;
- a profile of said average grey levels (a,b,c) is traced as a function of the positions (h) of the lines in the image;
- each of said profiles (a,b,c) thus traced is compared to a reference profile corresponding to a correct inclination of the optical axis; and
- the inclination of the optical axis is modified to correct any variations detected between said profiles thus traced (a,b,c) and said reference profile.

2. Method according to Claim 1, **characterised in that**, in the stage of comparing the profiles traced (a,b,c) with the reference profile corresponding to the correct inclination of the optical axis, the position of a characteristic size of the profile corresponding to each image is determined and the inclination of the optical axis is regulated in the position for which the position of said characteristic size of said profile is equal or close to the position of the characteristic size corresponding to an image for which the reflection is specular in the middle of the image.

3. Method according to Claim 2, **characterised in that** the characteristic size of said profile is selected from the group comprising the maximum and the centre of gravity of said profile.

4. Method according to Claim 1, **characterised in that** the average grey level of a line or the image is determined by measuring the grey level at a predetermined number of points on the line and by calculating the average value of the grey levels measured at these points on the line.

5. Method according to Claim 1, **characterised in that** the cylindrical body (4) is a cylinder of a rolling mill.

6. Method according to Claim 1, **characterised in that** the inclination of the optical axis is measured and displayed.

7. Method according to Claim 1, **characterised in that** the adjustment of the inspection device (1) is regulated.

8. Method according to Claim 1, **characterised in that** the illumination of the zone observed and the sensitivity of the inspection device (1) are regulated.

## Patentansprüche

1. Verfahren für die Überprüfung der Oberfläche eines zylindrischen Körper (4), bei dem:
- mindestens ein Bereich der besagten Oberfläche mithilfe einer Prüfvorrichtung (1) beobachtet wird, die eine optische, in Richtung des besagten Bereichs ausgerichtete Achse darstellt, um somit den Oberflächenzustand des besagten Zylinders (4) zu bestimmen;
- durch die besagte Prüfvorrichtung (1) ein Bild des besagten Bereiches erfasst und analysiert wird; die Analyse des besagten Bildes wird mit der Analyse eines Referenzbildes vergleichen. Die vorhandenen Abweichungen zwischen der Analyse des erfassten Bildes und der Analyse des Referenzbildes werden hierbei festgestellt;
- mindestens die Ausrichtung der besagten optischen Achse in einer solchen Weise angepasst wird, dass sich die besagten Abweichungen reduzieren oder beseitigen lassen;
- die Ausrichtung der optischen Achse der Prüfvorrichtung (1), die auf den Bereich der zu überprüfenden Oberflächen gerichtet ist, in progressiver Weise verändert wird;
- der besagte Bereich für jede Position der besagten optischen Achse durch ein parallel zur Zylinderachse erfolgendes Scannen beobachtet wird.
Das Verfahren ist **dadurch gekennzeichnet, dass:**
- ein Bild des besagten Bereiches, das zur Richtung der Zylinderachse (4) parallele Linien enthält, gebildet wird;
- der Durchschnittswert der Graustufen jeder der besagten Linien des Bildes bestimmt wird;
- der Mittelwert der Graustufen jeder der besagten Bildlinien bestimmt ist;
- ein Profil der besagten mittleren Graustufen (a, b, c) in Abhängigkeit der Funktion der Position (h) der Linien im Bild gezeichnet wird;
- jedes der besagten somit gezeichneten Profile (a, b, c) mit einem Referenzprofil vergleichen wird, das einer korrekten Neigung der optischen Achse entspricht; und
- die Neigung der optischen Achse modifiziert wird, um die evtl. festgestellten Abweichungen zwischen den somit gezeichneten Profilen (a, b, c) und dem besagten Referenzprofil zu korrigieren.

2. Verfahren gemäß Anspruch 1, **dadurch gekennzeichnet, dass** während dem Schritt zum Vergleich der gezeichneten Profile (a, b, c) mit dem Referenzprofil, das einer korrekten Neigung der optischen Achse entspricht, die Position einer charakteristischen Größe des Profils, die jedem Bild entspricht, bestimmt wird und dass die Neigung der optischen Achse für die Position geregelt wird, so dass die Position der charakteristischen Größe des besagten Profils gleich oder nahe der Position der charakteristischen Größe ist, die einem Wert entspricht, für den die Reflexion in der Bildmitte spiegelförmig ist.

3. Verfahren gemäß Anspruch 2, **dadurch gekennzeichnet, dass** die charakteristische Größe des besagten Profils aus einer Gruppe ausgewählt wird, die das Maximum und den Schwerpunkt des besagten Profils umfasst.

4. Verfahren gemäß Anspruch 1, **dadurch gekennzeichnet, dass** die mittlere Graustufe einer Bildlinie dadurch bestimmt wird, dass die Graustufe an einer vorher bestimmten Anzahl an Punkten der Linie gemessen und der Durchschnittswert dieser an diesen Linienpunkten gemessenen Graustufen berechnet wird.

5. Verfahren gemäß Anspruch 1, **dadurch gekennzeichnet, dass** es sich bei dem zylindrischen Körner (4) um die Walze eines Walzwerks handelt.

6. Verfahren gemäß Anspruch 1, **dadurch gekennzeichnet, dass** die Neigung der optischen Achse gemessen und angezeigt wird.

7. Verfahren gemäß dem Anspruch 1, **dadurch gekennzeichnet, dass** die Ausrichtung der Prüfvorrichtung (1) geregelt wird.

8. Verfahren gemäß Anspruch 1, **dadurch gekennzeichnet, dass** die Beleuchtung des beobachteten Bereiches sowie die Empfindlichkeit der Prüfvorrichtung (1) geregelt werden.
